# EUROPÄISCHE PATENTSCHRIFT

(11) **EP 2 841 310 B1**
(45) Veröffentlichungstag und Bekanntmachung des Hinweises auf die Patenterteilung: **12.08.2015**
(21) Anmeldenummer: 12716411.9
(22) Anmeldetag: 23.04.2012
(51) Int. Cl.: B60R 21/207, B60N 2/58

(54) **AUFREISSSCHUTZ AN EINER SEITENLUFTKISSENAUSTRITTSNAHT EINES FAHRZEUGSITZBEZUGES UND FAHRZEUGSITZBEZUG MIT EINEM AUFREISSSCHUTZ**
TEAR PREVENTER ON A SIDE AIR CUSHION OUTLET SEAM OF A VEHICLE SEAT COVERING AND VEHICLE SEAT COVERING WITH A TEAR PREVENTER
PROTECTION ANTI-DÉCHIRURE SUR UNE COUTURE DE SORTIE DE COUSSIN GONFLABLE LATÉRAL D'UN REVÊTEMENT DE SIÈGE DE VÉHICULE ET REVÊTEMENT DE SIÈGE DE VÉHICULE DOTÉ D'UNE PROTECTION ANTI-DÉCHIRURE

(43) Veröffentlichungstag der Anmeldung: 04.03.2015
(73) Patentinhaber: Johnson Controls GmbH, 51399 Burscheid (DE)
(72) Erfinder: WIEDERHOEFT, Wolfgang, 42897 Remscheid (DE); ERBER, Hans, 51399 Burscheid (DE); RAUBAL, Christian, 94089 Neureichenau (DE)
(74) Vertreter: Finger, Catrin
(86) Internationale Anmeldenummer: PCT/EP2012/057386
(87) Internationale Veröffentlichungsnummer: WO 2013/159805

(56) Entgegenhaltungen:
- DE-A1-102007 050 274
- DE-A1-102009 006 732
- DE-U1- 29 704 593

## Beschreibung

Die Erfindung betrifft einen Aufreißschutz an einer Seitenluftkissenaustrittsnaht eines Fahrzeugsitzbezuges für einen Fahrzeugsitz gemäß dem Oberbegriff des Anspruchs 1. Weiterhin betrifft die Erfindung einen Fahrzeugsitzbezug mit einem Aufreißschutz an einer Seitenluftkissenaustrittsnaht gemäß dem Oberbegriff des Anspruchs 8.

Im Stand der Technik wird an den beiden Enden einer Seitenluftkissenaustrittsnaht eines Fahrzeugsitzbezuges ein Gewebeklebeband angeordnet, welches eine offene Gewebekante aufweist, welche in Richtung der Seitenluftkissenaustrittsnaht weist.

Die DE 297 04 593 U1 beschreibt Autositzbezüge, die auf den Polstern der Rück- und Vordersitze von Pkws anbringbar sind, bestehend aus Lehnenteilen und Sitzteilen, wobei die Lehnenteile und/oder Sitzteile der Bezüge auf ihren den Fahrzeugtüren zugewandten Seiten Sollbruchstellen für in der Lehne bzw. dem Sitz befindliche Seitenairbags aufweisen. Die Merkmale der Oberbegriffe der Ansprüche 1 und 8 sind aus diesem Dokument bekannt. Die WO 2009/120 754 A1 beschreibt einen Fahrzeugsitz, dessen Bezug zumindest abschnittsweise Durchtrittsöffnungen aufweist, welche mittels eines Klebebands verschlossen sind.

Die DE 10 2004 003 983 B3 beschreibt eine Reißnahtausbildung im Bezug eines mit einem Airbag ausgerüsteten Kraftfahrzeugsitzes. Dabei wird eine Reißnahtausbildung mit sich kreuzenden, Bezugteile miteinander verbindenden Reißnähten zur Verfügung gestellt, bei der im Kreuzungsbereich der Nähte zu setzende Nahtriegel keine örtliche Steigerung der Nahtfestigkeit hervorrufen. Die Nahtriegel der Reißnähte im Kreuzungsbereich sind jeweils nur in einem der beteiligten Bezugteile gesetzt.

Die DE 102 54 723 A1 beschreibt eine Insassenschutzvorrichtung an einem Fahrzeugsitz, insbesondere eines Kraftfahrzeuges mit einer in einem Airbagaustrittbereich eines Sitzbezuges eines Fahrzeugsitzes ausgebildeten Airbagaustrittöffnungsnaht, wobei der Sitzbezug eine dem Fahrzeuginnenraum zugewandte Sichtseite und eine dem Fahrzeuginnenraum abgewandte Sitzbezugrückseite aufweist und hinter dem Sitzbezug im nicht aktivierten Grundzustand wenigstens ein Airbag zusammengefaltet angeordnet ist. Im aktivierten Zustand der Insassenschutzvorrichtung ist der wenigstens eine Airbag aufblasbar und durch Öffnung der Airbagaustrittöffnungsnaht im Airbagaustrittbereich ausgebildete Austrittöffnung hindurch im Fahrzeuginnenraum aufblasbar. Dabei ist wenigstens ein Bestandteil der Airbagaustrittöffnungsnaht mittelbar oder unmittelbar mit wenigstens einer Verlagerungseinrichtung, vorzugsweise einem Zugmittel, gekoppelt. Die Verlagerungseinrichtung verlagert im aktivierten Zustand der Insassenschutzvorrichtung wenigstens den Bestandteil der Airbagaustrittöffnungsnaht vom Airbagaustrittbereich weg zur wenigstens teilweisen Auflösung des Nahtgefüges und damit zur Reduzierung der zur Freigabe der Airbagaustrittöffnung aufzubringenden Freigabekraft.

Die DE 696 01 699 T2 beschreibt eine Seitenairbagvorrichtung zum Einbetten in die Kabinenwandseite eines Fahrzeugsitzes, wobei das Sitzbezugmaterial in der Nähe einer Airbaggehäuseöffnung einen Nahtteil aufweist, wo das die Öffnung bedeckende Bezugmaterial und ein weiteres Bezugmaterial zusammengenäht sind, wobei dieser Nahtteil unter einem vorgegebenen Auslösedruck im Airbag aufreißbar ist und wobei zwischen dem weiteren Bezugmaterial am Nahtteil und einem festen Element, etwa einem Sitzrahmen, ein Band zum Unterdrücken einer Dehnung des weiteren Bezugmaterials bei der Auslösung des Airbags verläuft, wobei ein Ende des Bandes am festen Element befestigt ist und das andere Ende an das weitere Bezugmaterial mit dem Nähfaden des Nahtteils mit angenäht ist.

Die DE 197 46 387 A1 beschreibt ein in einem Modulgehäuse untergebrachtes Airbagmodul. Das Airbagmodul ist innerhalb einer Sitzlehne eines Sitzes eines Kraftfahrzeugs angeordnet, und der Deckel des Modulgehäuses öffnet sich durch Druck eines Airbags, der sich bei Seitenkollision des Kraftfahrzeugs aufbläst, um den Airbag von dem Deckel in den Passagierraum des Fahrzeugs zu entfalten. Auch wenn sich der Deckel nicht öffnen lässt, wenn er selbst von einer durch Kollisionsaufprall verformten Tür niedergedrückt wird, reißen in einem Gehäusekörper des Modulgehäuses gebildete Reißlinien, um eine Vorderwand des Gehäusekörpers in Richtung zur Vorderseite des Fahrzeugs zu verschwenken. Daher kann sich der Airbag von dem vorderen Wandteil des Gehäusekörpers in den Passagierraum ohne Behinderung entfalten.

Die DE 198 31 462 A1 beschreibt ein Innenverkleidungsteil, insbesondere für eine mit einem Seitenaufprallschutz (Airbag) versehene Seitentür eines Personenkraftwagens. Das Innenverkleidungsteil umfaßt einen Trägerkörper mit einem Ausschnitt, der von einem Formschaumteil überdeckt ist. Das Trägerteil trägt eine auch das Formschaumteil überdeckende Schaumauflage, die ihrerseits von einer Dekorhaut überdeckt ist. Die Dekorhaut ist zweigeteilt und die Dekorhautteile sind über eine aufreißbare Naht miteinander verbunden. Die Aufreißnaht bildet eine sich quer über den Ausschnitt erstreckende Sollreißsteile, die auch in den Schaumteilen vorgesehen ist. Die Besonderheit des Innenverkleidungsteils besteht in der Abdichtung der Naht mittels eines sich über den gesamten Nahtverlauf erstreckenden Dichtungsbands und der einstückigen Ausbildung von Formteil und Schaumauflage, durch Aufschäumen des Raums zwischen Trägerkörper und Dekorhaut.

Aufgabe der vorliegenden Erfindung ist es, einen gegenüber dem Stand der Technik verbesserten und insbesondere kostengünstigeren und effektiveren Aufreißschutz an einer Seitenluftkissenaustrittsnaht eines Fahrzeugsitzbezuges für einen Fahrzeugsitz und einen Fahrzeugsitzbezug mit einem Aufreißschutz an einer Seitenluftkissenaustrittsnaht und ein Verfahren zu dessen Herstellung anzugeben.

Hinsichtlich des Aufreißschutzes wird die Aufgabe durch die im Anspruch 1 angegebenen Merkmale gelöst. Hinsichtlich des Fahrzeugsitzbezuges wird die Aufgabe durch die im Anspruch 8 angegebenen Merkmale gelöst.

Vorteilhafte Weiterbildungen der Erfindung sind Gegenstand der Unteransprüche.

Beim Aufreißschutz an einer Seitenluftkissenaustrittsnaht eines Fahrzeugsitzbezuges für einen Fahrzeugsitz ist erfindungsgemäß an den beiden Nahtenden der Seitenluftkissenaustrittsnaht jeweils ein Gewebeschlauch an einer Innenseite des Fahrzeugsitzbezuges angeordnet und form-, stoff- und/oder kraftschlüssig mit dem Fahrzeugsitzbezug verbunden. Auf diese Weise ist ein definiertes Aufreißen der Seitenluftkissenaustrittsnaht bis zu den Gewebeschläuchen an den beiden Nahtenden ermöglicht.

Besonders vorteilhafterweise ist der Gewebeschlauch mittels zumindest einer zusätzlichen Naht mit dem Fahrzeugsitzbezug vernäht. Dadurch ist ein besonders sicherer und fester Halt des Gewebeschlauches am Fahrzeugsitzbezug ermöglicht.

In einer vorteilhaften Ausführungsform ist der Gewebeschlauch mit seiner Längsausdehnung in Querrichtung zur Längsausdehnung der Seitenluftkissenaustrittsnaht angeordnet. Somit weist der in Richtung der Nahtenden der Seitenluftkissenaustrittsnaht gerichtete Abschnitt des Gewebeschlauches keine offene Gewebekante auf, wodurch der vom Gewebeschlauch gebildete Aufreißschutz besonders widerstandsfähig ist.

In einer besonders vorteilhaften Ausführungsform ist der Gewebeschlauch nahtlos ausgebildet. Somit weist der Gewebeschlauch in Umfangsrichtung keinerlei Nähte auf, welche eine Reißfestigkeit herabsetzen oder verringern können.

Die Seitenluftkissenaustrittsnaht ist bevorzugt im Bereich einer Lehnenwange des Fahrzeugsitzes angeordnet und verläuft im Wesentlichen vertikal entlang der Lehnenwange des Fahrzeugsitzes.

In einer weiteren vorteilhaften Ausführungsform ist die Seitenluftkissenaustrittsnaht als Sollaufreißnaht ausgebildet, welche bei Entfaltung eines Seitenluftkissens ein Hindurchtreten des sich entfaltenden Seitenluftkissens durch die aufgerissene Seitenluftkissenaustrittsnaht des Fahrzeugsitzbezuges ermöglicht. Dadurch kann das Seitenluftkissen seine bestimmungsgemäße Wirkung auf den Sitzinsassen entfalten.

Beim Fahrzeugsitzbezug mit einem Aufreißschutz an einer Seitenluftkissenaustrittsnaht ist endseitig einer Seitenluftkissenaustrittsnaht erfindungsgemäß jeweils ein Gewebeschlauch an einer Innenseite des Fahrzeugsitzbezuges form-, stoff- und/oder kraftschlüssig angeordnet. Dadurch ist ein definiertes Aufreißen der Seitenluftkissenaustrittsnaht bis zum Aufreißschutz, welcher von den Gewebeschläuchen an den beiden Nahtenden gebildet wird, ermöglicht.

Beim Verfahren zur Herstellung eines Aufreißschutzes an einer Seitenluftkissenaustrittsnaht eines Fahrzeugsitzbezuges wird erfindungsgemäß endseitig einer Seitenluftkissenaustrittsnaht jeweils ein Gewebeschlauch an einer Innenseite des Fahrzeugsitzbezuges form-, stoff- und/oder kraftschlüssig angeordnet.

Anhand der beigefügten schematischen Figuren wird die Erfindung näher erläutert.

Dabei zeigen:
- Figur 1: schematisch einen Fahrzeugsitz mit einem Aufreißschutz an einer Seitenluftkissenaustrittsnaht eines Fahrzeugsitzbezuges,
- Figur 2: schematisch einen Fahrzeugsitzbezug mit einer aufgerissenen Seitenluftkissennaht,
- Figur 3: schematisch einen oberen Aufreißschutz an einer Seitenluftkissenaustrittsnaht eines Fahrzeugsitzbezuges nach dem Stand der Technik,
- Figur 4: schematisch einen Gewebeklebebandabschnitt nach dem Stand der Technik,
- Figur 5: schematisch einen erfindungsgemäßen oberen Aufreißschutz an einer Seitenluftkissenaustrittsnaht eines Fahrzeugsitzbezuges,
- Figur 6: schematisch einen Gewebeschlauch,
- Figur 7: schematisch einen unteren Aufreißschutz an einer Seitenluftkissenaustrittsnaht eines Fahrzeugsitzbezuges nach dem Stand der Technik und
- Figur 8: schematisch einen erfindungsgemäßen unteren Aufreißschutz an einer Seitenluftkissenaustrittsnaht eines Fahrzeugsitzbezuges.

Einander entsprechende Teile sind in allen Figuren mit den gleichen Bezugszeichen versehen.

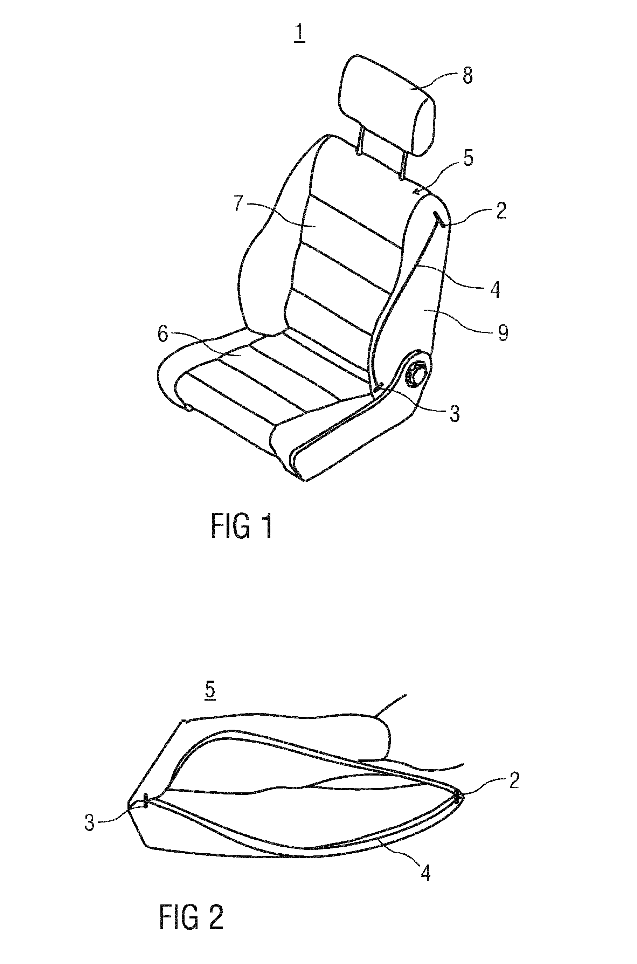

In Figur 1 ist schematisch ein Fahrzeugsitz 1 mit einem oberen Aufreißschutz 2 und einem unteren Aufreißschutz 3 an einer Seitenluftkissenaustrittsnaht 4 eines Fahrzeugsitzbezuges 5 dargestellt. Eine solche Seitenluftkissenaustrittsnaht 4 wird auch als SAB-Naht bezeichnet. Bei dem Fahrzeugsitz 1 handelt es sich um einen Fahrzeugsitz, welcher zumindest eine Sitzfläche 6, eine Sitzlehne 7 und eine Kopfstütze 8 umfasst.

Die Seitenluftkissenaustrittsnaht 4 ist im Bereich einer Lehnenwange 9 des Fahrzeugsitzes 1 angeordnet und verläuft im Wesentlichen vertikal entlang der Lehnenwange 9 des Fahrzeugsitzes 1. Hinter der Seitenluftkissenaustrittsnaht 4 ist ein nicht dargestelltes Seitenluftkissen in der Lehnenwange 9 angeordnet, welches sich bei einer unfallbedingten Auslösung durch die Seitenluftkissenaustrittsnaht 4 hindurch entfaltet.

Dazu ist die Seitenluftkissenaustrittsnaht 4 als herkömmliche Sollaufreißnaht ausgebildet, welche bei Entfaltung des Seitenluftkissens ein Hindurchtreten des sich entfaltenden Seitenluftkissens durch die aufgerissene Seitenluftkissenaustrittsnaht 4 des Fahrzeugsitzbezuges 5 ermöglicht.

In Figur 2 ist schematisch ein Fahrzeugsitzbezug 5 mit einer bedingt durch eine Auslösung des Seitenluftkissens aufgerissenen Seitenluftkissenaustrittsnaht 4 dargestellt.

Endseitig ist an den beiden Nahtenden der Seitenluftkissenaustrittsnaht 4 jeweils ein Aufreißschutz 2, 3 angeordnet. Dieser Aufreißschutz 2, 3 soll ein unkontrolliertes Aufreißen des Fahrzeugsitzbezuges 5 über die Seitenluftkissenaustrittsnaht 4 hinaus verhindern. Dazu ist im Stand der Technik ein Gewebeklebebandabschnitt 10 endseitig der Seitenluftkissenaustrittsnaht 4 angeordnet.

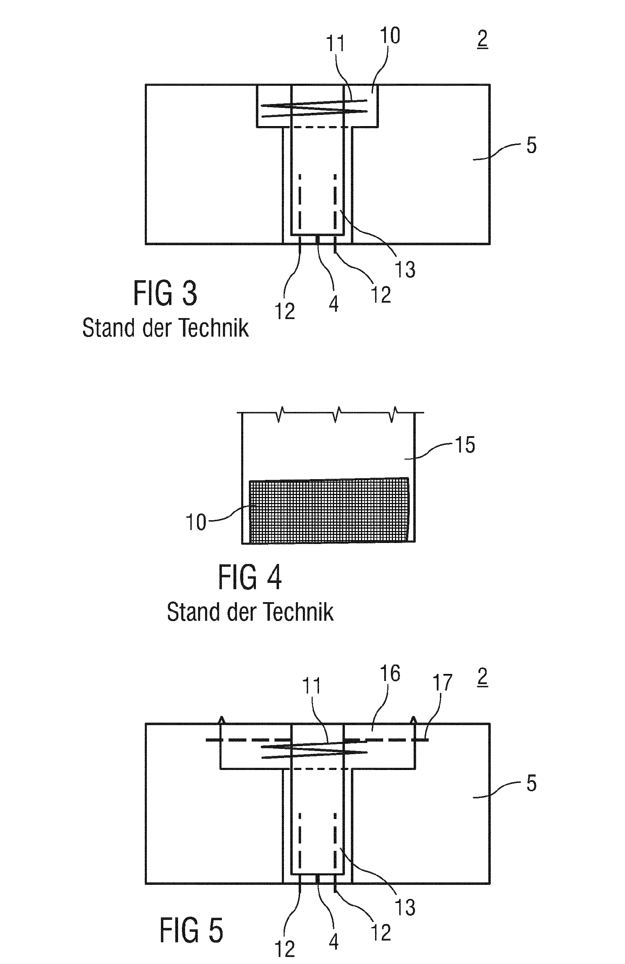

In Figur 3 ist schematisch ein solcher oberer Aufreißschutz 2 an der Seitenluftkissenaustrittsnaht 4 des Fahrzeugsitzbezuges 5 nach dem Stand der Technik dargestellt. Ein in Figur 4 näher dargestellter Gewebeklebebandabschnitt 10 ist mittels einer Zick-Zack-Naht 11 innenseitig am Fahrzeugsitzbezug 5 angeordnet. Dabei ist der Gewebeklebebandabschnitt 10 in Verlängerung einer Doppelnaht 12, welche einen perforierten Gewebebandabschnitt 13 der Seitenluftkissenaustrittsnaht 4 am Fahrzeugsitzbezug 5 befestigt, angeordnet. Somit weist eine offene Gewebekante des Gewebeklebebandabschnitts 10 in Richtung der Seitenluftkissenaustrittsnaht 4, welche bei einwirkenden Belastungen aufreißen kann. Dadurch ist der Aufreißschutz 2 geschwächt und hält nicht unter allen auftretenden Betriebsbedingungen den einwirkenden Kräften stand.

Der mittels der Doppelnaht 12 beidseitig der Seitenluftkissenaustrittsnaht 4 befestigte perforierte Gewebebandabschnitt 13 bildet die Sollaufreißnaht für das Seitenluftkissen.

Der Gewebeklebebandabschnitt 10 wird in zugeschnittenen Abschnitten geliefert, welche auf einer Trägerfolie 15 aufgebracht sind.

Figur 5 zeigt schematisch den erfindungsgemäßen oberen Aufreißschutz 2 an der Seitenluftkissenaustrittsnaht 4 des Fahrzeugsitzbezuges 5. Dabei ist ein Gewebeschlauch 16 in Verlängerung der Doppelnaht 12 angeordnet und mittels der Zick-Zack-Naht 11 innenseitig am Fahrzeugsitzbezug 5 befestigt. Zusätzlich ist der Gewebeschlauch 16 mittels jeweils einer zusätzlichen Naht 17 mit dem Fahrzeugsitzbezug 5 beidseitig der Seitenluftkissenaustrittsnaht 4 vernäht.

Der Gewebeschlauch 16 ist mit seiner Längsausdehnung in Querrichtung zur Längsausdehnung der Seitenluftkissenaustrittsnaht 4 angeordnet.
Dadurch weist der in Richtung der Nahtenden der
Seitenluftkissenaustrittsnaht 4 gerichtete Abschnitt des Gewebeschlauches 16 keine offene Gewebekante auf, wodurch der vom Gewebeschlauch 16 gebildete Aufreißschutz 2 besonders widerstandsfähig ist.

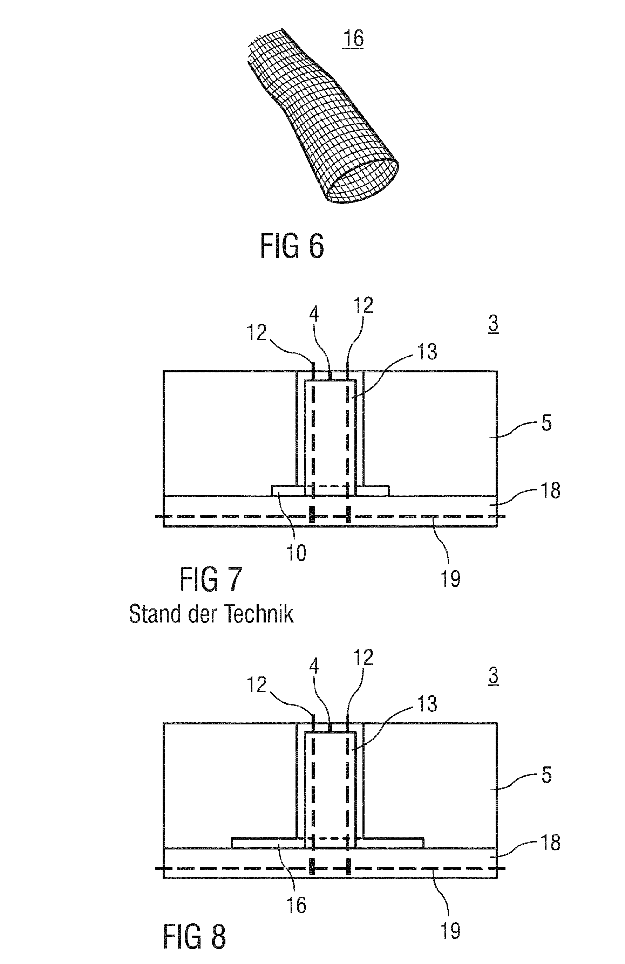

In Figur 6 ist schematisch der Gewebeschlauch 16 dargestellt. In einer besonders vorteilhaften Ausführungsform ist der Gewebeschlauch 16 nahtlos ausgebildet. Somit weist der Gewebeschlauch 16 in Umfangsrichtung keinerlei Nähte auf, welche seine Reißfestigkeit herabsetzen oder verringern können.

In Figur 7 ist schematisch ein unterer Aufreißschutz 3 an der Seitenluftkissenaustrittsnaht 4 des Fahrzeugsitzbezuges 5 nach dem Stand der Technik dargestellt. Der Gewebeklebebandabschnitt 10 ist im umgefalzten Abschnitt 18 des Fahrzeugsitzbezuges 5 angeordnet und mittels der Falznaht 19 und der Doppelnaht 12 am Fahrzeugsitzbezug 5 befestigt. Somit weist eine offene Gewebekante des Gewebeklebebandabschnitts 10 in Richtung der Seitenluftkissenaustrittsnaht 4, welche bei einwirkenden Belastungen aufreißen kann. Dadurch ist der untere Aufreißschutz 3 geschwächt und hält nicht unter allen auftretenden Betriebsbedingungen den einwirkenden Kräften stand.

Figur 8 zeigt schematisch den erfindungsgemäßen unteren Aufreißschutz 3 an der Seitenluftkissenaustrittsnaht 4 des Fahrzeugsitzbezuges 5. Dabei ist der Gewebeklebebandabschnitt 10 durch den Gewebeschlauch 16 ersetzt. Somit ist der Gewebeschlauch 16 im umgefalzten Abschnitt 18 des Fahrzeugsitzbezuges 5 angeordnet und mittels der Falznaht 19 und der Doppelnaht 12 am Fahrzeugsitzbezug 5 befestigt. Dabei ist der Gewebeschlauch 16 mit seiner Längsausdehnung in Querrichtung zur Längsausdehnung der Seitenluftkissenaustrittsnaht 4 angeordnet, wodurch keine offene Gewebekante des Gewebeschlauches 16 in Richtung der Seitenluftkissenaustrittsnaht 4 weist.

### Bezugszeichenliste

- 1: Fahrzeugsitz
- 2: oberer Aufreißschutz
- 3: unterer Aufreißschutz
- 4: Seitenluftkissennaht
- 5: Fahrzeugsitzbezug
- 6: Sitzfläche
- 7: Sitzlehne
- 8: Kopfstütze
- 9: Lehnenwange
- 10: Gewebeklebebandabschnitt
- 11: Zick-Zack-Naht
- 12: Doppelnaht
- 13: perforierter Gewebebandabschnitt
- 15: Trägerfolie
- 16: Gewebeschlauch
- 17: zusätzliche Naht
- 18: umgefalzter Abschnitt
- 19: Falznaht

## Patentansprüche

1. Aufreißschutz (2, 3) an einer Seitenluftkissenaustrittsnaht (4) eines Fahrzeugsitzbezuges (5) für einen Fahrzeugsitz (1),
**dadurch gekennzeichnet, dass** an den beiden Nahtenden der Seitenluftkissenaustrittsnaht (4) jeweils ein Gewebeschlauch (16) an einer Innenseite des Fahrzeugsitzbezuges (5) angeordnet und form-, stoff- und/oder kraftschlüssig mit dem Fahrzeugsitzbezug (5) verbunden ist.

2. Aufreißschutz (2, 3) nach Anspruch 1,
**dadurch gekennzeichnet, dass** der Gewebeschlauch (16) mittels zumindest einer zusätzlichen Naht (17) mit dem Fahrzeugsitzbezug (5) vernäht ist.

3. Aufreißschutz (2, 3) nach Anspruch 1 oder 2,
**dadurch gekennzeichnet, dass** der Gewebeschlauch (16) mit seiner Längsausdehnung in Querrichtung zur Längsausdehnung der Seitenluftkissenaustrittsnaht (4) angeordnet ist.

4. Aufreißschutz (2, 3) nach einem der vorherigen Ansprüche,
**dadurch gekennzeichnet, dass** der Gewebeschlauch (16) nahtlos ausgebildet ist.

5. Aufreißschutz (2, 3) nach einem der vorherigen Ansprüche,
**dadurch gekennzeichnet, dass** die Seitenluftkissenaustrittsnaht (4) im Bereich einer Lehnenwange (9) des Fahrzeugsitzes (1) angeordnet ist.

6. Aufreißschutz (2, 3) nach einem der vorherigen Ansprüche,
**dadurch gekennzeichnet, dass** die Seitenluftkissenaustrittsnaht (4) im Wesentlichen vertikal entlang der Lehnenwange (9) des Fahrzeugsitzes (1) verläuft.

7. Aufreißschutz (2, 3) nach einem der vorherigen Ansprüche,
**dadurch gekennzeichnet, dass** die Seitenluftkissenaustrittsnaht (4) als Sollaufreißnaht ausgebildet ist, welche bei Entfaltung eines Seitenluftkissens ein Hindurchtreten des sich entfaltenden Seitenluftkissens durch die aufgerissene Seitenluftkissenaustrittsnaht (4) des Fahrzeugsitzbezuges (5) ermöglicht.

8. Fahrzeugsitzbezug (5) mit einem Aufreißschutz (2, 3) an einer Seitenluftkissenaustrittsnaht (4),
**dadurch gekennzeichnet, dass** endseitig einer Seitenluftkissenaustrittsnaht (4) jeweils ein Gewebeschlauch (16) an einer Innenseite des Fahrzeugsitzbezuges (5) form-, stoff- und/oder kraftschlüssig angeordnet ist.

## Claims

1. A tear preventer (2, 3) on a side air cushion outlet seam (4) of a vehicle seat covering (5) for a vehicle seat (1), **characterized in that** in each case a fabric tube (16) is arranged on an inner face of the vehicle seat covering (5) on the two seam ends of the side air cushion outlet seam (4) and is connected by a positive, material and/or non-positive connection to the vehicle seat covering (5).

2. The tear preventer (2, 3) as claimed in claim 1, **characterized in that** the fabric tube (16) is stitched by means of at least one additional seam (17) to the vehicle seat covering (5).

3. The tear preventer (2, 3) as claimed in claim 1 or 2, **characterized in that** the fabric tube (16) is arranged with its longitudinal extent in the transverse direction relative to the longitudinal extent of the side air cushion outlet seam (4).

4. The tear preventer (2, 3) as claimed in one of the preceding claims, **characterized in that** the fabric tube (16) is configured to be seamless.

5. The tear preventer (2, 3) as claimed in one of the preceding claims, **characterized in that** the side air cushion outlet seam (4) is arranged in the region of a backrest side element (9) of the vehicle seat (1).

6. The tear preventer (2, 3) as claimed in one of the preceding claims, **characterized in that** the side air cushion outlet seam (4) extends substantially vertically along the backrest side element (9) of the vehicle seat (1).

7. The tear preventer (2, 3) as claimed in one of the preceding claims, **characterized in that** the side air cushion outlet seam (4) is configured as a predetermined tear seam which, when a side air cushion is being deployed, permits the deploying side air cushion to pass through the torn side air cushion outlet seam (4) of the vehicle seat covering (5).

8. A vehicle seat covering (5) with a tear preventer (2, 3) on a side air cushion outlet seam (4), **characterized in that** in each case a fabric tube (16) is arranged on an inner face of the vehicle seat covering (5) at the end of a side air cushion outlet seam (4) by a positive, material and/or non-positive connection.

## Revendications

1. Protection anti-déchirure (2, 3) sur une couture de sortie de coussin gonflable latéral (4) d'un revêtement de siège de véhicule (5) pour un siège de véhicule (1), **caractérisée en ce qu'**au niveau des deux extrémités de couture de la couture de sortie de coussin gonflable latéral (4), un tuyau souple en tissu respectif (16) est disposé sur un côté intérieur du revêtement de siège de véhicule (5) et est connecté par engagement par correspondance de formes, par liaison de matière et/ou par force au revêtement de siège de véhicule (5).

2. Protection anti-déchirure (2, 3) selon la revendication 1,
**caractérisée en ce que** le tuyau souple en tissu (16) est cousu au revêtement de siège de véhicule (5) au moyen d'au moins une couture supplémentaire (17).

3. Protection anti-déchirure (2, 3) selon la revendication 1 ou 2,
**caractérisée en ce que** le tuyau souple en tissu (16) est disposé avec son étendue longitudinale dans la direction transversale par rapport à l'étendue longitudinale de la couture de sortie de coussin gonflable latéral (4).

4. Protection anti-déchirure (2, 3) selon l'une quelconque des revendications précédentes, **caractérisée en ce que** le tuyau souple en tissu (16) est réalisé sans couture.

5. Protection anti-déchirure (2, 3) selon l'une quelconque des revendications précédentes, **caractérisée en ce que** la couture de sortie de coussin gonflable latéral (4) est disposée dans la région d'une aile de dossier (9) du siège de véhicule (1).

6. Protection anti-déchirure (2, 3) selon l'une quelconque des revendications précédentes, **caractérisée en ce que** la couture de sortie de coussin gonflable latéral (4) s'étend essentiellement verticalement le long de l'aile de dossier (9) du siège de véhicule (1).

7. Protection anti-déchirure (2, 3) selon l'une quelconque des revendications précédentes, **caractérisée en ce que** la couture de sortie de coussin gonflable latéral (4) est réalisée sous forme de couture destinée à la déchirure, qui, lors du déploiement d'un coussin d'air latéral, permet la sortie du coussin d'air latéral se déployant à travers la couture de sortie de coussin gonflable latéral (4) ouverte par déchirure du revêtement de siège de véhicule (5).

8. Revêtement de siège de véhicule (5) comprenant une protection anti-déchirure (2, 3) au niveau d'une couture de sortie de coussin gonflable latéral (4),
**caractérisé en ce qu'**un tuyau souple en tissu respectif (16) est disposé par engagement par correspondance de formes, par liaison de matière et/ou par force sur un côté intérieur du revêtement de siège de véhicule (5), du côté des extrémités d'une couture de sortie de coussin gonflable latéral (4).
